# FASCICULE DE BREVET EUROPEEN

(11) **EP 4 248 104 B1**
(45) Date de publication et mention de la délivrance du brevet: **01.01.2025**
(21) Numéro de dépôt: 21802726.6
(22) Date de dépôt: 04.11.2021
(51) Int. Cl.: F16F 1/373, F16F 1/376, F16F 1/44, B60T 13/74, H02K 5/24, F16D 65/18, F16D 125/40

(54) **REDUCTEUR DE VIBRATIONS POUR GROUPE MOTOREDUCTEUR POUR ACTIONNEUR ELECTRIQUE DE FREIN A DISQUE**
SCHWINGUNGSDÄMPFER FÜR EINE GETRIEBEMOTOREINHEIT FÜR EINEN ELEKTRISCHEN AKTUATOR EINER SCHEIBENBREMSE
VIBRATION DAMPER FOR A GEARED MOTOR UNIT FOR AN ELECTRICAL ACTUATOR OF A DISC BRAKE

(30) Priorité: 19.11.2020 FR 2011899
(43) Date de publication de la demande: 27.09.2023
(73) Titulaire: Hitachi Astemo France, 93700 Drancy (FR)
(72) Inventeur: BRIANE, Nicolas, 49800 TRELAZE (FR); DE CHAMPEAUX, Benoît, 93300 AUBERVILLIERS (FR)
(74) Mandataire: IPAZ
(86) Numéro de dépôt international: PCT/EP2021/080586
(87) Numéro de publication internationale: WO 2022/106208

(56) Documents cités:
- DE-A1- 102016 221 162
- DE-A1- 102016 223 358
- DE-A1- 102019 204 182
- DE-B4- 102004 048 700
- DE-B4- 102011 117 087
- US-A- 3 191 897
- US-A- 3 442 475
- US-A- 6 098 948
- US-A1- 2016 200 294
- US-A1- 2020 036 257
- US-B2- 10 316 915
- US-B2- 9 145 950
- US-B2- 9 410 590

## Description

L'invention se rapporte à un groupe motoréducteur électrique monté en bout d'un actionneur d'un frein à disque, qui comporte un moteur monté en porte-à-faux, parallèlement à la sortie du réducteur et du même côté.

### ETAT DE LA TECHNIQUE

Dans le domaine des freins, pour l'automobile en général, et plus particulièrement les freins à disque, il est devenu courant d'implanter un actionneur électrique directement sur le frein. Cet actionneur est en général utilisé pour la fonction de frein de stationnement et de secours, mais parfois aussi en tant que frein de service.

Cet actionneur consiste, de façon générale, en un groupe motoréducteur électrique (ou MGU ou « Motor Gear Unit »), qui comporte un dispositif d'entrainement (ou moteur) et un dispositif de transmission (ou mécanisme de réduction), les deux dispositifs étant reliés entre eux (le moteur actionnant le dispositif de transmission) et étant enfermés dans un carter de protection comprenant d'une part un boitier présentant deux ouvertures et d'autre part deux couvercles de fermeture rapportés et fixés sur chacune des ouvertures.

Une première ouverture donne accès à une première partie du boitier, plus large qu'une seconde partie de boitier, la première partie de boitier accueillant le dispositif de transmission comportant plusieurs étages d'engrenages liés les uns aux autres, et notamment un engrenage planétaire (pouvant comporter deux étages) et comprenant au moins une couronne dentée avec une denture interne.

La seconde partie de boitier, moins large que la première et solidaire à la première, accueille le dispositif d'entrainement (ou moteur). Cette seconde partie de boitier sera appelée « unité d'accueil du dispositif d'entrainement » et présente la seconde ouverture qui donne accès au moteur.

De façon générale, le boitier présente une forme qui épouse sensiblement la forme extérieure des deux dispositifs reliés ensemble.

Les deux couvercles sont fixés sur le boitier par soudure.

Il arrive souvent que les motoréducteurs électriques présentent des inconvénients en matière de vibration : en effet, les vibrations peuvent être source d'inconfort pour les occupants du véhicule, notamment par les bruits qu'elles provoquent et / ou elles peuvent détériorer le motoréducteur.

L'invention vise en particulier à atténuer les bruits et les vibrations qui sont générés dans l'unité d'accueil du dispositif d'entrainement, en particulier ceux générés par le moteur dans le boitier.

### EXPOSE DE L'INVENTION

L'invention a pour objet à cet effet un groupe motoréducteur pour actionneur électrique de frein à disque, ledit groupe motoréducteur comportant un boitier renfermant un moteur électrique présentant un axe définissant une direction axiale, et un mécanisme de réduction connecté mécaniquement audit moteur électrique pour fournir en sortie dudit mécanisme de réduction un entrainement en rotation d'un arbre selon un axe de sortie parallèle à ladite direction axiale. Le groupe motoréducteur est remarquable en ce qu'il comporte un dispositif amortisseur apte à venir se positionner sur une partie d'extrémité du moteur électrique comprenant un élément d'amortissement axial de mouvements du moteur suivant ladite direction axiale et un élément d'amortissement radial des mouvements du moteur suivant une direction radiale du moteur électrique.

Ainsi réalisé, le groupe motoréducteur conforme à l'invention bloque les mouvements du moteur électrique dans le boitier à la fois dans une direction axiale et dans une direction radiale, ce qui conduit à limiter les vibrations du moteur et donc l'émission de bruit.

Suivant d'autres caractéristiques avantageuses propres à l'invention, le groupe motoréducteur conforme à l'invention comporte également les caractéristiques suivantes, prises séparément ou en combinaison :
Dans un mode de réalisation présenté par la suite, le dispositif amortisseur comporte deux couronnes coaxiales parmi lesquelles :
- une première couronne qui prend appui contre une paroi cylindrique que présente ladite partie d'extrémité du moteur électrique, ladite première couronne réalisant ledit élément d'amortissement radial, et
- une seconde couronne qui prend appui contre une surface externe du moteur, perpendiculaire à ladite direction axiale, ladite seconde couronne réalisant ledit élément d'amortissement axial.

Il est avantageusement prévu que la paroi cylindrique et la surface annulaire soient axialement décalées l'une par rapport à l'autre. Ainsi, l'amortissement peut également se faire suivant des directions intermédiaires entre les directions axiale et radiale.

En outre, la première couronne et la seconde couronne sont reliées radialement entre elles par un anneau de liaison, la première couronne étant positionnée à l'intérieur de la seconde couronne et prenant appui contre un premier épaulement que présente l'extrémité du moteur. Ce mode de réalisation permet de réaliser le dispositif d'amortissement en une seule pièce, ce qui facilite le montage du groupe motoréducteur.

En outre encore, suivant un autre mode de réalisation avantageux, l'anneau de liaison comporte un bourrelet de positionnement radial, apte à venir s'insérer dans une gorge ménagée dans ladite partie d'extrémité du moteur électrique. Le montage est également facilité par ce mode de réalisation, car le bourreler et la gorge permettent de maintenir en place le dispositif d'amortissement lors du montage.

Avantageusement, la première couronne présente au moins un élément en relief sur sa paroi périphérique externe. En outre, la première couronne présente de préférence plusieurs éléments en relief répartis uniformément sur ladite paroi périphérique externe. Suivant un mode de réalisation, le dispositif amortisseur est réalisé en une seule pièce par moulage.

En outre, le groupe motoréducteur conforme à l'invention comprend un dispositif amortisseur réalisé en éthylène-propylène-diène monomère, présentant une dureté Shore D comprise entre 30 et 50, de préférence de sensiblement 40.

L'invention vise également un couvercle pour groupe motoréducteur tel que défini ci-dessus, le boitier du groupe motoréducteur présentant une ouverture d'accès au moteur électrique, le couvercle étant apte à fermer l'ouverture d'accès et étant équipé d'un dispositif amortisseur également tel que défini ci-dessus.

Suivant un mode de réalisation avantageux, le dispositif amortisseur est solidarisé au fond du couvercle par surmoulage. Ce mode de réalisation permet d'équiper les couvercles déjà existants.

Suivant une alternative de réalisation, le dispositif amortisseur est réalisé d'une seule pièce avec le couvercle. On comprendra par « une seule pièce » le fait que le couvercle et le dispositif amortisseur sont réalisés dans la même matière et ensemble lors de la réalisation du couvercle, par exemple par moulage.

Enfin, l'invention vise un ensemble comportant un frein à disque, notamment à étrier mobile, notamment coulissant, et un actionneur associé à un groupe motoréducteur tel que défini ci-avant.

### PRESENTATION DES FIGURES

D'autres avantages et caractéristiques de l'invention apparaîtront à l'examen de la description détaillée d'un mode de mise en oeuvre nullement limitatif, et des dessins annexés, sur lesquels :
[Fig. 1] est une vue en perspective d'un dispositif amortisseur,
[Fig. 2] est une vue en perspective d'un groupe motoréducteur conforme à l'invention, qui comporte un dispositif amortisseur conforme à l'invention et
[Fig. 3] est une vue en coupe partielle d'une partie III du groupe motoréducteur montré en figure 2, pour actionneur électrique de frein à disque, conforme à l'invention.

### DESCRIPTION DES FIGURES

Les termes « supérieur », « inférieur », « gauche », « droite », « haut », « bas » etc. sont utilisés dans la description qui va suivre uniquement pour que le lecteur se repère sur les figures : il devra être compris que ces termes ne sont pas des limitations de l'invention.

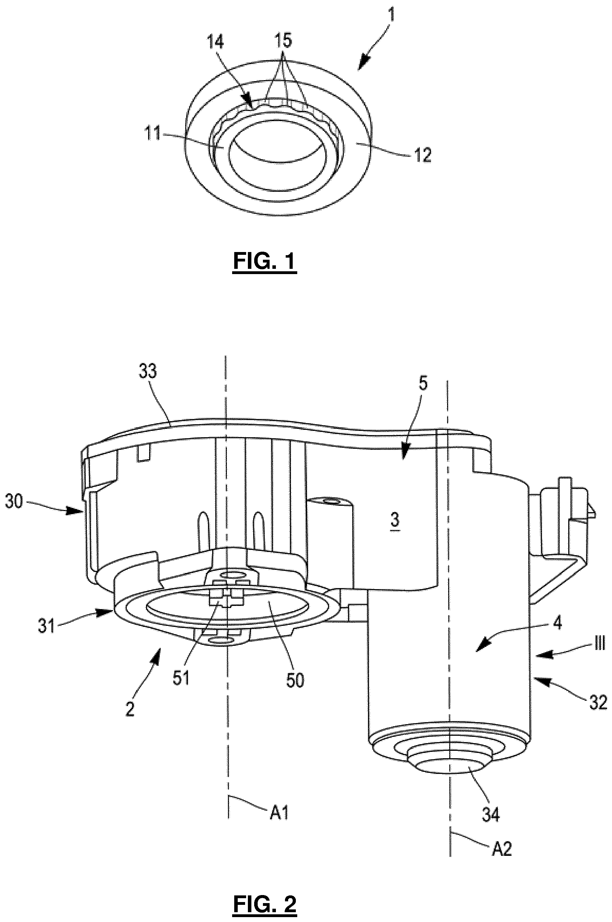

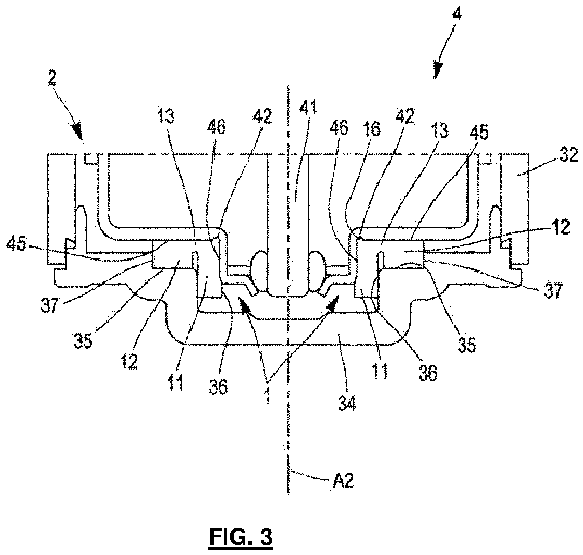

Le dispositif amortisseur 1 est montré seul en figure 1. Sur les figures 2 et 3, il est monté dans un groupe motoréducteur 2.

Le dispositif amortisseur 1 montré sur les figures est conçu pour amortir les mouvements d'un moteur contenu dans le groupe motoréducteur 2, ces mouvements étant à l'origine de bruits : il convient donc de présenter, dans un premier temps quels sont les éléments compris dans le groupe motoréducteur 2 et leur agencement, de manière à identifier la zone du groupe motoréducteur à l'origine du bruit et dans laquelle le dispositif amortisseur 1 est mis en œuvre.

La figure 2 montre le groupe motoréducteur 2 dans son ensemble, le dispositif amortisseur 1 étant invisible sur cette figure car il est enfermé dans le groupe motoréducteur 2.

Le groupe motoréducteur 2 est conçu pour un actionneur de frein disque, de type comportant un étrier mobile monté coulissant sur une chape, l'actionneur entrainant en déplacement l'étrier sous l'action du groupe motoréducteur ou d'un piston hydraulique. Sur la figure 2, montrant un exemple d'un tel groupe motoréducteur, on observe qu'il comporte un boitier 3, formant un carter de protection pour le groupe motoréducteur 2, le boitier 3 présentant deux parties :
une partie supérieure 30, présentant sensiblement une section en forme de haricot,
accueillant deux formes cylindriques : une première forme cylindrique 31 située à gauche dans la partie supérieure 30 sur la figure 2 et une seconde forme cylindrique 32 située à droite dans la partie supérieure 30 sur la figure 2,
une partie inférieure, formée par la seconde forme cylindrique 32 qui est saillante vers le bas et qui s'étend sur une hauteur sensiblement identique à la hauteur de la partie supérieure 30.

Une partie du moteur électrique 4 de ce groupe motoréducteur 2 est contenu dans la partie inférieure (ou seconde forme cylindrique) 32, est visible partiellement en figure 3, le moteur électrique se prolongeant dans la partie supérieure.

Le groupe motoréducteur 2 comporte également un mécanisme de réduction 5 dont la sortie 50 est visible et correspond à la première forme cylindrique 31 en partie basse de la partie supérieure 30 du boitier.

Le mécanisme de réduction 5 est connecté mécaniquement au moteur électrique 4, au moyen de systèmes d'engrenages de roues dentées, et notamment d'un système planétaire qui donne la forme en haricot de la partie supérieure 30 du boitier 3.

On note sur la figure 2 que la sortie 50 du mécanisme de réduction présente un arbre 51 qui s'étend suivant un axe de sortie A1.

L'arbre 51 permet de commander l'actionneur à l'origine du mouvement de l'étrier du piston du frein à disque (actionneur et frein à disque non illustrés) typiquement du type vis- écrou.

La partie supérieure 30 du boitier est fermée par un couvercle 33.

La partie inférieure 32 du boitier, qui accueille le moteur électrique 4, est également fermée par un couvercle 34.

Le moteur 4 présente un axe A2, définissant une direction axiale de moteur parallèle à l'axe de sortie A1 de l'arbre 51 qui est relié au mécanisme de réduction du groupe motoréducteur 2.

Le moteur 4 comporte également un arbre 41, d'axe A2.

L'invention est mise en oeuvre dans cette partie inférieure 32 du boitier 3 et elle est représentée en détail en figure 3 : le dispositif amortisseur 1 est positionné entre le moteur 4 et le couvercle 34.

Le dispositif amortisseur 1 est également montré seul en figure 1 : il comporte deux couronnes coaxiales parmi lesquelles une première couronne 11, dite « interne », positionnée dans une seconde couronne 12 dite « externe ».

Les deux couronnes coaxiales 11 et 12 sont toutes deux saillantes d'un anneau coaxial 13 de liaison, qui forme un bord commun aux deux couronnes 11 et 12 et qui est plus particulièrement visible en figure 3.

Ce dispositif amortisseur 1 est réalisé en une seule pièce par moulage en éthylène-propylène-diène monomère (ou EPDM) et présente une dureté Shore D de sensiblement 40.

On remarque que la première couronne 11 interne est plus haute que la seconde couronne 12 externe.

De plus, la première couronne 11 interne présente, sur sa paroi périphérique externe 14, des éléments en reliefs répartis uniformément : il s'agit de nervures radiales 15 montrées en figure 1.

Il est à noter que la paroi périphérique externe 14 de la première couronne fait face à la paroi périphérique interne de la seconde couronne 12.

Pour assurer sa fonction d'amortisseur de bruit, le dispositif 1 exerce à la foi une retenue du moteur 4 dans la direction axiale A2 du moteur, et une retenue du moteur 4 dans une direction radiale, perpendiculaire à la direction A2.

La seconde couronne externe 12 a notamment pour fonction d'amortir et/ou d'empêcher tout mouvement axial du moteur 4. Pour ce faire, la seconde couronne externe 12 prend appui à la fois :
sur une surface interne 35 du couvercle 34, cette surface interne 35 s'étendant suivant un plan perpendiculaire à l'axe A2 du moteur 4 quand le couvercle 34 est fixé sur le boitier 3, et
sur une surface externe 45 du moteur 4, qui est parallèle à la surface 35 interne annulaire du couvercle quand le couvercle 34 est fixé sur le boitier 3 (et donc perpendiculaire également à l'axe A2 du moteur).

La surface externe 45 du moteur forme une partie d'extrémité du moteur et la surface interne 35 du couvercle 34 forme une partie de fond du couvercle 34.

Les surfaces interne 35 et externe 45 sont donc parallèles entre elles et la seconde couronne 12 est prise en sandwich entre ces deux surfaces en position de fermeture du couvercle 34.

Quant à la première couronne interne 11, elle a pour fonction d'amortir et/ou d'empêcher tout mouvement radial du moteur 4 et, pour ce faire, elle prend appui à la fois :
sur une paroi 46 d'extrémité du moteur 4 qui est cylindrique, d'axe A2, et qui forme un épaulement avec la surface externe 45 du moteur, et
sur une paroi 36 de fond du couvercle 34, annulaire, d'axe A2 quand le couvercle 34 est fixé sur le boitier 3.

Les parois 46 et 36 sont ainsi coaxiales en position de fermeture du couvercle 34 et la première couronne est prise en sandwich entre ces deux parois.

On note que la paroi 36 annulaire du couvercle 34 prend donc appui sur la paroi périphérique externe 14 de la première couronne qui porte les nervures radiales 15 : les nervures radiales sont ainsi écrasées contre la paroi 36.

Cette caractéristique permet d'éviter une surcontrainte en utilisant l'espace entre les nervures.

La première couronne interne 11 prend également appui contre une autre surface annulaire 37 du fond du couvercle 34, également d'axe A2, cette autre surface annulaire 37 étant ainsi coaxiale à la paroi annulaire 36 du couvercle et formant un épaulement avec la surface interne 35 du fond du couvercle 34.

De cette manière, la première couronne 11 du dispositif 1 conforme à l'invention prend appui contre un premier épaulement radial (formé entre la surface 45 et la paroi 46 de la partie d'extrémité du moteur 4). Egalement, la seconde couronne 12 prend appui contre un second épaulement radial du fond du couvercle en position de fermeture (le second épaulement étant formé entre la surface 35 et la surface annulaire 37).

On remarque, en outre, que le premier épaulement (45, 46) de la partie d'extrémité du moteur 4 et le second épaulement du (35, 37) du couvercle en position de fermeture se font face.

C'est ainsi que cette configuration assure un amortissement radial et axial du moteur dans le boitier 3 soumis à vibration. Et ceci conduit à une limitation des bruits émis par les éléments que comporte le groupe motoréducteur 2.

Pour faciliter le positionnement et le maintien du dispositif amortisseur 1 sur la partie d'extrémité du moteur 4, il est également prévu un bourrelet saillant 16 (voir figure 3) sur le bord libre de l'anneau de liaison 13 qui vient au droit de la paroi interne de la première couronne 11.

Le bourrelet saillant 16 est conçu pour venir s'insérer dans une gorge 42 ménagée dans la partie d'extrémité du moteur électrique 4, à la jonction entre la surface externe 45 et la paroi cylindrique 46 du moteur 4.

En effet, dans ce mode de réalisation, le couvercle 34 et le dispositif amortisseur 1 sont réalisés distinctement et sont assemblés l'un après l'autre dans le groupe motoréducteur 2.

Ce mode de réalisation permet de mettre l'invention sur des groupes motoréducteurs existants.

Néanmoins, pour faciliter le montage, il pourrait être prévu que le dispositif d'amortissement 1 soit surmoulé dans le couvercle 34 : il serait ainsi solidarisé au couvercle, ce qui réduirait le temps de montage du groupe motoréducteur 2.

Il pourrait également être prévu de réaliser un couvercle et un dispositif amortisseur en une seule pièce par moulage.

Grâce à la présence du dispositif amortisseur 1, entre l'extrémité du moteur électrique 4 et du fond du couvercle 34, on constate que l'intensité des bruits enregistrés, émis par le groupe motoréducteur 2, peut baisser de 2dB.

On comprend de la description qui précède comment l'invention permet de baisser les bruits générés par le groupe motoréducteur en fonctionnement, et notamment ceux générés par le moteur électrique dans le boitier 3 du groupe motoréducteur 2.

Il devra être compris que l'invention n'est pas limitée au mode de réalisation spécifiquement décrit et qu'elle s'étend à la mise en oeuvre de tout moyen équivalent. Notamment, la mise en oeuvre d'un amortisseur 1 associé à un boitier 3 dépourvue d'ouverture moteur et de couvercle 34 ne sort pas du cadre de la présente invention.

### Références :

- 1: dispositif amortisseur
- 2: groupe motoréducteur
- 3: boitier du groupe motoréducteur
- 4: moteur électrique
- 5: mécanisme de réduction
- 11: première couronne
- 12: seconde couronne
- 13: anneau coaxial de liaison
- 14: paroi périphérique externe de la première couronne
- 15: nervures radiales
- 16: bourrelet saillant de positionnement
- 30: partie supérieure du boitier
- 31: première forme cylindrique
- 32: seconde forme cylindrique/partie inférieure du boitier
- 33: couvercle de la partie supérieure du boitier
- 34: couvercle de la partie inférieure du boitier
- 35: surface interne du couvercle perpendiculaire à l'axe A2 du moteur
- 36: paroi de fond annulaire du couvercle
- 37: surface annulaire de fond
- 41: arbre du moteur
- 42: gorge d'accueil du bourrelet
- 45: surface externe du moteur
- 46: paroi cylindrique d'extrémité du moteur
- 50: sortie du mécanisme de réduction
- 51: arbre de transmission
- A1: axe de sortie du mécanisme de réduction
- A2: axe du moteur

## Revendications

1. Groupe motoréducteur (2) pour actionneur électrique de frein à disque, ledit groupe motoréducteur (2) comportant un boitier (3) renfermant un moteur électrique (4) présentant un axe (A2) définissant une direction axiale, et un mécanisme de réduction (5) connecté mécaniquement audit moteur électrique (4) pour fournir en sortie (50) dudit mécanisme de réduction (5) un entrainement en rotation d'un arbre (51) selon un axe de sortie (A1) parallèle à ladite direction axiale (A2), le groupe motoréducteur comportant :
un dispositif amortisseur (1) apte à venir se positionner sur une partie d'extrémité du moteur électrique (4), comprenant un élément (12) d'amortissement axial de mouvements du moteur suivant ladite direction axiale et un élément (11) d'amortissement radial des mouvements du moteur suivant une direction radiale du moteur électrique (4),
ledit dispositif amortisseur (1) comportant deux couronnes coaxiales (11, 12), parmi lesquelles :
- une première couronne (11) qui prend appui contre une paroi cylindrique (46) que présente ladite partie d'extrémité du moteur électrique (4) ladite première couronne réalisant ledit élément d'amortissement radial, et
- une seconde couronne (12) qui prend appui contre une surface externe (45) du moteur perpendiculaire à ladite direction axiale, ladite seconde couronne réalisant ledit élément d'amortissement axial,
**caractérisé en ce que** la première couronne (11) et la seconde couronne (2) sont reliées radialement entre elles par un anneau de liaison (13), **en ce que** la première couronne (11) est positionnée à l'intérieur de la seconde couronne (12) et prend appui contre un premier épaulement (45, 46) que présente l'extrémité du moteur (4).

2. Groupe motoréducteur (2) selon la revendication 1, **caractérisé en ce qu'**il comporte un couvercle (34) présentant une surface annulaire (36) et **en ce que** ladite paroi cylindrique (46) et la surface annulaire (36) sont axialement décalées l'une par rapport à l'autre quand le couvercle est fixé sur le boitier (3).

3. Groupe motoréducteur (2) selon la revendication 1, **caractérisé en ce que** l'anneau de liaison (13) comporte un bourrelet (16) de positionnement radial, apte à venir s'insérer dans une gorge (42) ménagée dans ladite partie d'extrémité du moteur électrique (4).

4. Groupe motoréducteur (2) selon l'une quelconque des revendications 1 à 3, **caractérisé en ce que** la première couronne (11) présente au moins un élément en relief (15) sur sa paroi périphérique externe (14).

5. Groupe motoréducteur (2) selon la revendication 4, **caractérisé en ce que** ladite première couronne (11) présente plusieurs éléments en relief (15) répartis uniformément sur ladite paroi périphérique externe (14).

6. Groupe motoréducteur (2) selon l'une quelconque des revendications 1 à 5, **caractérisé en ce que** le dispositif amortisseur (1) est réalisé en une seule pièce par moulage.

7. Groupe motoréducteur (2) selon l'une quelconque des revendications précédentes, **caractérisé en ce que** le dispositif amortisseur (1) est réalisé en éthylène-propylène-diène monomère et présente une dureté Shore D comprise entre 30 et 50, de préférence de sensiblement 40.

8. Couvercle pour groupe motoréducteur (2) selon l'une quelconque des revendications 1 à 7, ledit boitier (3) dudit groupe motoréducteur (2) présentant une ouverture d'accès au moteur électrique (4), ledit couvercle (34) étant apte à fermer ladite ouverture d'accès au moteur électrique (4), ledit couvercle (34) étant équipé d'un dispositif amortisseur (1) comprenant un élément (12) d'amortissement axial de mouvements du moteur suivant ladite direction axiale et un élément (11) d'amortissement radial des mouvements du moteur suivant une direction radiale du moteur électrique (4), le dispositif amortisseur comportant deux couronnes coaxiales (11, 12), parmi lesquelles :
- une première couronne (11), apte à prendre appui contre une paroi cylindrique (46) que présente ladite partie d'extrémité du moteur électrique (4), ladite première couronne réalisant ledit élément d'amortissement radial, et
- une seconde couronne (12), apte à prendre appui contre une surface externe (45) du moteur perpendiculaire à ladite direction axiale, ladite seconde couronne réalisant ledit élément d'amortissement axial, **caractérisé en ce que** la première couronne (11) et la seconde couronne (12) sont reliées radialement entre elles par un anneau de liaison (13) et **en ce que** la première couronne (11) est positionnée à l'intérieur de la seconde couronne (12),
ledit couvercle étant **caractérisé en ce que** le dispositif amortisseur (1) est réalisé d'une seule pièce avec le couvercle.

9. Ensemble comportant un frein à disque, notamment à étrier mobile, notamment coulissant, et un actionneur associé à un groupe motoréducteur (2) selon l'une quelconque des revendications 1 à 7.

## Patentansprüche

1. Getriebemotorgruppe (2) für einen elektrischen Scheibenbremsenaktuator, wobei die Getriebemotorgruppe (2) ein Gehäuse (3), das einen Elektromotor (4) einschließt, der eine Achse (A2) vorweist, die eine axiale Richtung definiert, und einen Untersetzungsmechanismus (5) aufweist, der zum Bereitstellen an einem Ausgang (50) des Untersetzungsmechanismus (5) eines Drehantriebs einer Welle (51) entlang einer Ausgangsachse (A1) parallel zu der axialen Richtung (A2) an den Elektromotor (4) mechanisch angeschlossen ist, die Getriebemotorengruppe umfassend:
eine Dämpfungsvorrichtung (1), die geeignet ist, um sich an einem Endteil des Elektromotors (4) zu positionieren, umfassend ein Element (12) für eine axiale Dämpfung von Bewegungen des Motors in der axialen Richtung und ein Element (11) für eine radiale Dämpfung von Bewegungen des Motors in einer radialen Richtung des Elektromotors (4),
wobei die Dämpfungsvorrichtung (1) zwei koaxiale Kronen (11, 12) aufweist, darunter:
- eine erste Krone (11), die an einer zylindrischen Wand (46) anliegt, die von dem Endteil des Elektromotors (4) vorgewiesen ist, wobei die erste Krone das radiale Dämpfungselement herstellt, und
- eine zweite Krone (12), die senkrecht zu der axialen Richtung an einer Außenoberfläche (45) des Motors anliegt, wobei die zweite Krone das axiale Dämpfungselement herstellt,
**dadurch gekennzeichnet, dass** die erste Krone (11) und die zweite Krone (2) durch einen Verbindungsring (13) radial miteinander verbunden sind, **dass** die erste Krone (11) innerhalb der zweiten Krone (12) positioniert ist und an einer ersten Schulter anliegt (45, 46), die von dem Ende des Motors (4) vorgewiesen ist.

2. Getriebemotorgruppe (2) nach Anspruch 1,
**dadurch gekennzeichnet, dass** sie eine Abdeckung (34) aufweist, die eine ringförmige Oberfläche (36) vorweist, und **dadurch, dass** die zylindrische Wand (46) und die ringförmige Oberfläche (36) relativ zueinander axial versetzt sind, wenn die Abdeckung an dem Gehäuse (3) befestigt ist.

3. Getriebemotorgruppe (2) nach Anspruch 1,
**dadurch gekennzeichnet, dass** der Verbindungsring (13) einen radialen Positionierungswulst (16) aufweist, der geeignet ist, um in eine Nut (42) eingesetzt zu werden, die in dem Endteil des Elektromotors (4) vorgesehen ist.

4. Getriebemotorgruppe (2) nach einem der Ansprüche 1 bis 3,
**dadurch gekennzeichnet, dass** die erste Krone (11) an ihrer Außenumfangswand (14) mindestens ein erhabenes Element (15) vorweist.

5. Getriebemotorgruppe (2) nach Anspruch 4,
**dadurch gekennzeichnet, dass** die erste Krone (11) mehrere erhabene Elemente (15) vorweist, die auf der äußeren Umfangswand (14) gleichmäßig verteilt sind.

6. Getriebemotorgruppe (2) nach einem der Ansprüche 1 bis 5,
**dadurch gekennzeichnet, dass** die Dämpfungsvorrichtung (1) durch Formen einstückig hergestellt ist.

7. Getriebemotorgruppe (2) nach einem der vorstehenden Ansprüche, **dadurch gekennzeichnet, dass** die Dämpfungsvorrichtung (1) aus Ethylen-Propylen-Dien-Monomer hergestellt ist und eine Shore-D-Härte zwischen 30 und 50, vorzugsweise im Wesentlichen 40, vorweist.

8. Abdeckung für die Getriebemotorengruppe (2) nach einem der Ansprüche 1 bis 7, wobei das Gehäuse (3) der Getriebemotorengruppe (2) eine Zugangsöffnung zu dem Elektromotor (4) vorweist, wobei die Abdeckung (34) geeignet ist, um die Zugangsöffnung zu dem Elektromotor (4) zu verschließen, wobei die Abdeckung (34) mit einem Dämpfungselement (1) ausgestattet ist, umfassend ein Element (12) für die axiale Dämpfung von Bewegungen des Motors in der axialen Richtung und ein Element (11) für die radiale Dämpfung von Bewegungen des Motors in einer radialen Richtung des Elektromotors (4), wobei die Dämpfungsvorrichtung zwei koaxiale Kronen (11, 12) aufweist, darunter:
- eine erste Krone (11), die geeignet ist, um an einer zylindrischen Wand (46) anzuliegen, die von dem Endteil des Elektromotors (4) vorgewiesen ist, wobei die erste Krone das radiale Dämpfungselement herstellt, und
- eine zweite Krone (12), die geeignet ist, um senkrecht zu der axialen Richtung an einer Außenoberfläche (45) des Motors anzuliegen, wobei die zweite Krone das axiale Dämpfungselement herstellt,
**dadurch gekennzeichnet, dass** die erste Krone (11) und die zweite Krone (12) durch einen Verbindungsring (13) radial miteinander verbunden sind, und **dass** die erste Krone (11) innerhalb der zweiten Krone (12) positioniert ist,
wobei die Abdeckung **dadurch gekennzeichnet ist, dass** die Dämpfungsvorrichtung (1) aus einem Stück mit der Abdeckung hergestellt ist.

9. Anordnung, die eine Scheibenbremse aufweist, insbesondere mit einem bewegbaren, insbesondere verschiebbaren, Bügel und einem Aktuator, der einer Getriebemotorgruppe (2) nach einem der Ansprüche 1 bis 7 zugeordnet ist.

## Claims

1. Motor gear unit (2) for a disc brake electric actuator, said motor gear unit (2) comprising a housing (3) containing an electric motor (4) having an axis (A2) defining an axial direction, and a reduction mechanism (5) mechanically connected to said electric motor (4) to provide at the output (50) of said reduction mechanism (5) a rotational drive of a shaft (51) along an output axis (A1) parallel to said axial direction (A2), the motor gear unit comprising:
a damping device (1) capable of being positioned on an end part of the electric motor (4), comprising an element (12) for axial damping of movements of the motor in said axial direction and an element (11) for radial damping of the movements of the motor in a radial direction of the electric motor (4),
said damping device (1) comprising two coaxial rings (11, 12), among which:
- a first ring (11) which bears against a cylindrical wall (46) presented by said end part of the electric motor (4), said first ring forming said radial damping element, and
- a second ring (12) which bears against an external surface (45) of the motor perpendicular to said axial direction, said second ring forming said axial damping element,
**characterized in that** the first ring (11) and the second ring (2) are radially connected to each other by a connecting ring (13), **in that** the first ring (11) is positioned inside the second ring (12) and bears against a first shoulder (45, 46) that the end of the motor (4) presents.

2. Motor gear unit (2) according to claim 1, **characterized in that** it comprises a cover (34) having an annular surface (36) and **in that** said cylindrical wall (46) and the annular surface (36) are axially offset relative to each other when the cover is fixed on the housing (3).

3. Motor gear unit (2) according to claim 1, **characterized in that** the connecting ring (13) comprises a bead (16) for radial positioning, capable of fitting into a groove (42) arranged in said end part of the electric motor (4).

4. Motor gear unit (2) according to any one of claims 1 to 3, **characterized in that** the first ring (11) has at least one element in relief (15) on its outer peripheral wall (14).

5. Motor gear unit (2) according to claim 4, **characterized in that** said first ring (11) has several elements in relief (15) uniformly distributed over said outer peripheral wall (14).

6. Motor gear unit (2) according to any one of claims 1 to 5, **characterized in that** the damping device (1) is produced in a single piece by moulding.

7. Motor gear unit (2) according to any one of the preceding claims, **characterized in that** the damping device (1) is produced from ethylene-propylene-diene monomer and has a Shore D hardness comprised between 30 and 50, preferably of substantially 40.

8. Cover for a motor gear unit (2) according to any one of claims 1 to 7, said housing (3) of said motor gear unit (2) having an opening for access to the electric motor (4), said cover (34) being capable of closing said opening for access to the electric motor (4), said cover (34) being equipped with a damping device (1) comprising an element (12) for axial damping of the movements of the motor in said axial direction and an element (11) for radial damping of the movements of the motor in a radial direction of the electric motor (4), the damping device comprising two coaxial rings (11, 12), among which:
- a first ring (11), capable of bearing against a cylindrical wall (46) presented by said end part of the electric motor (4), said first ring forming said radial damping element, and
- a second ring (12), capable of bearing against an external surface (45) of the motor perpendicular to said axial direction, said second ring forming said axial damping element, **characterized in that** the first ring (11) and the second ring (12) are radially connected to each other by a connecting ring (13), and **in that** the first ring (11) is positioned inside the second ring (12),
said cover being **characterized in that** the damping device (1) is produced in a single piece with the cover.

9. Assembly comprising a disc brake, in particular with a movable, in particular sliding, calliper, and an actuator associated with a motor gear unit (2) according to any one of claims 1 to 7.
